# EUROPÄISCHE PATENTSCHRIFT

(11) **EP 2 583 738 B1**
(45) Veröffentlichungstag und Bekanntmachung des Hinweises auf die Patenterteilung: **21.01.2015**
(21) Anmeldenummer: 12007070.1
(22) Anmeldetag: 12.10.2012
(51) Int. Cl.: B01D 46/42, F16K 7/16

(54) **Druckluftventil zur Reingaszufuhr**
Compressed air valve for pure gas supply
Valve pneumatique pour alimentation en gaz pur

(30) Priorität: 20.10.2011 DE 102011116392
(43) Veröffentlichungstag der Anmeldung: 24.04.2013
(73) Patentinhaber: Buschjost GmbH, 32545 Bad Oeynhausen (DE)
(72) Erfinder: Beckmann, Hans-Joachim, 32278 Kirchlengern (DE)
(74) Vertreter: Busse & Busse

(56) Entgegenhaltungen:
- AU-B2- 646 765
- DE-A1- 1 407 922
- JP-A- 6 011 055
- JP-A- 2003 278 928
- US-A- 6 105 933

## Beschreibung

Die Erfindung betrifft ein Druckluftventil, wie es vorzugsweise zur Zufuhr von Reingas eingesetzt wird. Derartige Ventile kommen insbesondere bei Abreinigungsprozessen zum Einsatz und werden daher auch Abreinigungsventile genannt. Sie haben die Aufgabe, einen Druckgasimpuls zur Verfügung zu stellen, um Filtereinrichtungen beispielsweise an Filtertaschen oder -schläuchen entgegen der normalen Durchströmungsrichtung kurzfristig durchzublasen, um anhaftende Teilchen und Verunreinigungen zu lösen. Zur Abreinigung wird Reingas eingesetzt, das im Normalfall Luft ist. Andere Gase sind jedoch ebenfalls möglich, z.B. Stickstoff. Gattungsgemäße Ventile sind in der Praxis bekannt (z.B. Ventile der Baureihen 82900 bis 82910 sowie 82960 bis 82970 der Buschjost GmbH, D-Bad Oeynhausen).

Derartige Ventile werden auch bei verschiedenen Einsatzwecken benötigt, wo am Ventilausgang aggressive Medien anstehen. Solche Einsatzzwecke sind z.B. als Reinigungsventil für die Katalysatorreinigung, insbesondere von schweren Dieselmaschinen oder beispielsweise zur Staubfilterreinigung von Müllverbrennungsanlagen, wo ebenfalls aggressive Gase mit der Ventilausgangsseite in Kontakt kommen. Dadurch unterliegen der Ventilausgang, der Ventilsitz und insbesondere die Ventilmembran einem hohen Verschleiß, so dass die Membran oder sogar das gesamte Ventil für solche Einsatzzwecke nur eine kurze Standzeit haben.

Der Erfindung liegt daher die Aufgabe zugrunde, ein gattungsgemäßes Ventil zu schaffen, das hinsichtlich seiner Haltbarkeit insbesondere im Einsatz mit durch aggressive Medien belastetem Rohgas erhöht ist.

Aus der US-PS 6,105,933 ist ein Kolbenventil bekannt, das unterhalb des Ventilsitzes eine Verbindungsbohrung zur Reingasseite aufweist, so dass ein Leckagestrom entsteht. Dieser befindet sich jedoch abseits des Ventilsitzes und trägt daher nicht wesentlich zur Langlebigkeit des Ventils bei. Die JP 6011055 A zeigt ein ähnliches Ventil jedoch in einer vereinfachten Ausführungsform und mit noch weiter entferntem Übergang zwischen Rohgas- und Reingasseite.

Diese Aufgabe wird erfindungsgemäß durch ein Druckluftventil mit den Merkmalen des Anspruchs 1 gelöst. Indem erfindungsgemäß zwischen dem Reingaseingang und dem Ventilausgang zumindest eine Zwangsleckageverbindung in der Ventilmembran vorgesehen wird, kann durch das unter Druck anstehende Reingas ständig in geringer Menge zur Ventilausgangsseite strömen, wodurch dort anstehendes Rohgas durch Reingas verdrängt und von den dortigen Ventilbauteilen wie Membran, Ventilsitz und Ventilausgang beabstandet wird. Dadurch stehen diese Bauteile nicht mehr ständig mit aggressivem Rohgas in Kontakt, so dass Verschleißprozesse durch Zersetzung bzw. die Beaufschlagung mit belastetem Rohgas vermieden oder zumindest extrem verringert werden. Die Standzeit der Ventile und insbesondere der Ventilmembran kann dadurch auf ein Vielfaches erhöht werden, wodurch Revisions- und Austauschkosten sowie Stillstandzeiten herabgesetzt werden.

Bevorzugt hat die Zwangsleckageverbindung bzw. die Zwangsleckageverbindungen einen minimalen Öffnungsdurchmesser, an den sich ein Durchgangsbereich anschließt, der vorzugsweise zylindrisch und vorzugsweise demgegenüber vergrößert ist. Dadurch kann im Bereich des minimalen Öffnungsdurchmessers ein exakter Öffnungsquerschnitt erreicht werden, über dessen Dimensionierung sich das durch die Leckageverbindung zum Ventilausgang strömende Reingas präzise dosieren lässt. Dieser minimale Öffnungsdurchmesser der Zwangsleckageverbindung liegt bevorzugt zwischen 0,1 mm und 2 mm, insbesondere zwischen 0,2 mm und 0,5 mm, besonders bevorzugt bei etwa 0,3 mm. Dabei ist unter Zwangsleckageverbindung im Vorausgehenden und im Folgenden immer auch eine Mehrzahl von Zwangsleckageverbindungen zu verstehen. Unter Öffnungsdurchmesser ist ferner auch ein Öffnungsquerschnitt zu verstehen, wenn die minimale Öffnung der Zwangsleckageverbindung nicht kreisförmig sein sollte, was durchaus möglich ist.

Wichtig ist, dass der minimale Öffnungsdurchmesser der Zwangsleckageverbindung bzw. der minimale Öffnungsquerschnitt einer Zwangsleckageverbindung oder die Summe der Öffnungsquerschnitte bei mehreren Zwangsleckageverbindungen kleiner als der minimale Öffnungsdurchmesser bzw. Querschnitt eines Druckaufbaudurchbruchs in der Ventilmembran zwischen dem Reingaseingang und dem Bereich oberhalb der Ventilmembran, d.h. der dem Ventilausgang abgewandten Ventilseite ist. Solche Druckaufbaudurchbrüche sind auch bei den Ventilen des Standes der Technik zwingend vorhanden und sichern die Schließposition der Ventilmembran über den durch das Reingas anstehenden Druck. Sollten mehrere Druckaufbaudurchbrüche vorhanden sein, muss auch hier wieder die Fläche der Durchlässe addiert werden. Entscheidend ist, dass der an der Ventilmembran auf der Schließseite in geschlossenem Zustand anstehende Druck erhalten bleibt. Daher muss durch den Druckaufbaudurchbruch stets mehr Reingang zuströmen können als durch die Zwangsleckageverbindung entweichen kann.

Vorzugsweise kann sich die Leckageöffnung mittig bzw. zentral in Öffnungsrichtung durch die Ventilmembran erstrecken. Die Öffnung kann direkt in die Ventilmembran eingebracht sein. Zur einfachen und präzisen Fertigung der Leckageöffnung kann diese auch eine Materialverstärkung aufweisen. Die Verstärkung kann aus dem Membranwerkstoff oder bevorzugt aus einem anderen Werkstoff als der Rest der Ventilmembran sein. So kann der die Leckageöffnung aufweisende Bereich separat und präzise, beispielsweise aus Metall gefertigt und anschließend an einer vorgesehenen Position der Ventilmembran platziert werden. Die Materialverstärkung kann hülsenartig, beispielsweise mit einem Flansch ausgebildet und vorzugsweise in die Ventilmembran eingepresst sein. An der dem Flansch gegenüberliegenden Seite, bevorzugt im Bereich des Ventilausgangs, kann eine solche Hülse beispielsweise mit einer in Presspassung aufgepressten Buchse fixiert und gegen ein Zurückrutschen gesichert werden. Diese Verbindung liegt vorzugsweise im Bereich eines gegenüber dem minimalen Öffnungsdurchmesser vergrößerten Öffnungsdurchmessers, so dass sich ein ggf. durch eine Quetschung oder Verformung veränderter Querschnitt des Öffnungsdurchmessers nicht auf die Präzision der Leckageöffnung auswirkt.

Mit einer erfindungsgemäß ausgestalteten Ventilmembran mit Leckageöffnung bzw. Leckageöffnungen können auch herkömmliche Ventile erfindungsgemäß umgerüstet und dadurch in ihrer Lebensdauer verlängert werden.

Weitere Vorteile und Einzelheiten ergeben sich aus den Unteransprüchen und in den Zeichnungen dargestellten Ausführungsbeispielen der Erfindung, die im Folgenden beschrieben werden; es zeigen:
- Fig. 1: ein erfindungsgemäßes, pneumatisch gesteuertes Ventil im Schnitt,
- Fig. 2: eine andere Ausführungsform des Gegenstands aus Fig. 1 als Magnetventil,
- Fig. 3: eine erfindungsgemäße Ventilmembran in perspektivischer Darstellung,
- Fig. 4: einen Schnitt in Richtung IV-IV durch den Gegenstand aus Fig. 3 und
- Fig. 5: eine vergrößerte Darstellung des Details V aus Fig. 4.

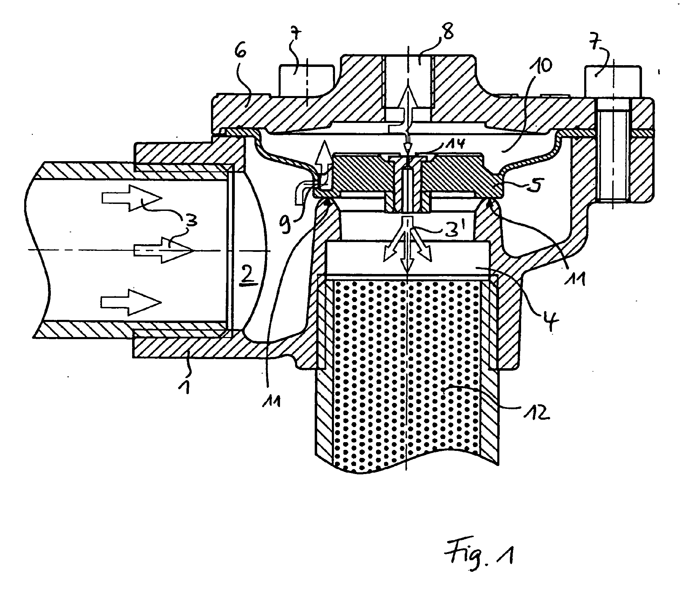

Das in Fig. 1 dargestellte Ventil besitzt ein Gehäuse 1 mit einem Reingaseingang 2, der mit einem unter Druck stehenden Reingasreservoir (nicht dargestellt) verbunden ist. Darüber strömt Reingas 3, dargestellt durch die unbefüllten Pfeile, in das Ventilinnere. Das Ventil verfügt über einen Ventilausgang 4, der vom Ventileingang 2 in geschlossenem Ventilzustand durch eine Ventilmembran 5 getrennt ist. Die Ventilmembran 5 ist über einen Deckel 6 mit Schrauben 7 am Gehäuse 1 festgelegt. Der Deckel 6 weist eine Steueröffnung 8 auf, mit der beispielsweise ein Schlauch zur Verbindung mit einem Steuerventil zur Öffnung der Ventilmembran 5 verbunden ist. Hierüber wird zur Öffnung des Ventils Reingas 3 in die Atmosphäre abgelassen, wodurch der über einen Druckaufbaudurchbruch 9 in einer Druckkammer 10 aufgebaute Ventildruck abfällt. Dadurch bewegt sich die Ventilmembran 5 nach oben, löst sich vom Ventilsitz 11 und gibt damit den direkten Durchfluss von Reingas 3 zum Ventilausgang 4 frei. (Diese Ventilposition ist nicht dargestellt.)

Im Bereich des Ventilausgangs 4 steht beispielsweise von einem Katalysator oder einem Verbrennungsanlagenfilter aggressives Rohgas 12, dargestellt durch Punkte, an. Damit dieses Rohgas 12 nicht in ständigem Kontakt mit den Bauteilen des Ventilausgangs 4, dem Ventilsitz 11 und insbesondere der Ventilmembran 5 steht, hat die Ventilmembran 5 eine Leckageöffnung 14, die sich bei der dargestellten Ausführungsform zentrisch durch die Ventilmembran 5 erstreckt und eine Zwangsleckageverbindung zwischen dem Reingaseingang 2 und dem Ventilausgang 4 darstellt. Eine solche Zwangsleckageverbindung kann auch (nicht dargestellt) direkt im Ventilgehäuse 1, beispielsweise unterhalb des Ventilsitzes 11 eingebracht sein.

Durch die Leckageöffnung 14 strömen auch bei geschlossenem Ventil geringe Mengen Reingas zum Ventilausgang über (siehe Dreierpfeil 3') und bilden dort ein Abstandspolster, das das Rohgas 12 von den empfindlichen Bauteilen im Bereich des Ventilausgangs 4, insbesondere von der Ventilmembran 5, beabstandet.

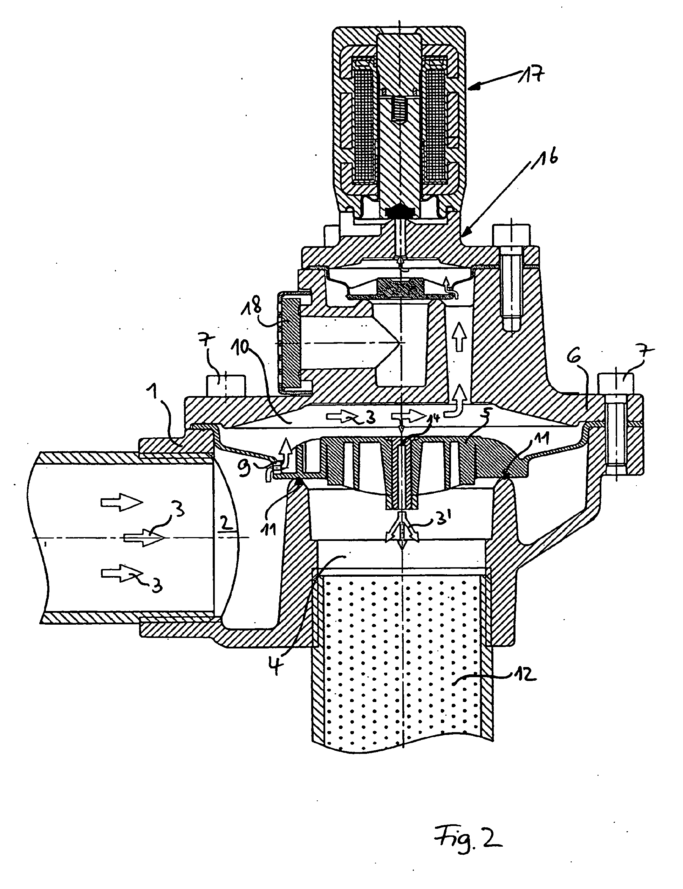

Das in Fig. 2 dargestellte Ventil unterscheidet sich von dem in Fig. 1 durch die Art der Ansteuerung. Es handelt sich hier um ein magnetisch angesteuertes Ventil mit einem Vorsteuerventil 16, das über einen Magneten 17 betätigt wird. Der Deckel 6 des Ventils verfügt zusätzlich über einen Schalldämpfer 18, durch den die Geräuschentwicklung im Schaltvorgang beim Druckablass erheblich vermindert werden kann (von ca. 200 bis 300 dB auf die 85 dB). Das Vorsteuerventil 16 dient der schnelleren Öffnung und damit der präziseren Druckluftimpulsfreigabe. Ein solches oder anders gestaltetes Vorsteuerventil kann aber auch bei der pneumatischen Ventilversion gemäß Fig. 1 vorgeschaltet werden.

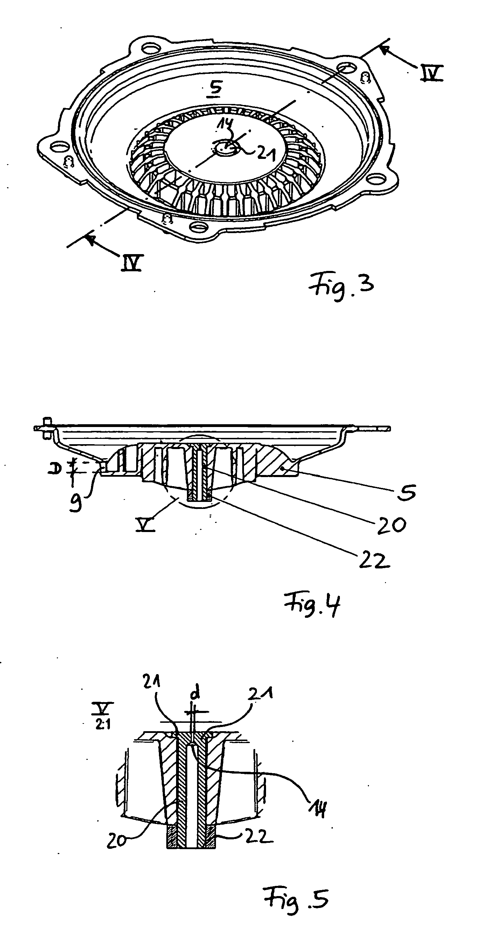

Die mit einer Leckageöffnung 14 erfindungsgemäß ausgestaltete Ventilmembran 5 ist in den Fig. 3 bis 5 im Detail dargestellt. Besonders deutlich zeigt Fig. 5 eine Ausgestaltung, bei der sich die Leckageöffnung 14 zentral durch die Ventilmembran 5 erstreckt und als separates Bauteil aus einem anderen, insbesondere metallischen Werkstoff in die Ventilmembran 5 eingebracht ist. Dies erfolgt bei der dargestellten Ausführungsform durch eine Leckagehülse 20, die obenseitig einen Flansch 21 aufweist. Die Leckagehülse 20 kann in eine Öffnung der Ventilmembran 5 eingepresst und untenseitig mit einer aufgepressten Buchse 22 gesichert sein.

Der minimale Durchmesser d der Leckageöffnung 14 beträgt etwa 0,3 mm und ist damit deutlich kleiner als der Öffnungsdurchmesser D des Druckaufbaudurchbruchs 9 (hier > 1 mm) der sich bei der dargestellten Ausführungsform an der Seite der Ventilmembran 5 befindet.

Die Fertigung der erfindungsgemäßen Ventilmembran 5 ist insbesondere durch die eingearbeitete Leckagehülse 20 auf einfache Weise präzise möglich. Die erfindungsgemäßen Ventilmembranen 5 sind nur unwesentlich teurer als herkömmliche, haben aber durch die Funktion der Rohgasbeabstandung eine erheblich höhere Lebensdauer für sich selbst und das gesamte Ventil.

## Patentansprüche

1. Druckluftventil zur Reingaszufuhr, insbesondere 2/2-Wege-Ventil für Abreinigungsprozesse, mit einem Gehäuse (1), das einen Reingaseingang (2) zur Verbindung mit zumindest einem unter Druck stehenden Reingasreservoir und zumindest einem Ventilausgang (4) zur impulsweisen Abgabe von Reingas (3) aufweist, die voneinander über eine Ventilmembran (5) trennbar und bei Abhebung der Ventilmembran (5) von einem Ventilsitz (11) miteinander verbindbar sind, **dadurch gekennzeichnet, dass** zwischen Reingaseingang (2) und Ventilausgang (4) in jedem Betriebszustand zumindest eine Zwangsleckageverbindung, gebildet durch eine Leckageöffnung (14) in der Ventilmembran (5) besteht, durch die Reingas (3) zum Ventilausgang (4) überströmt und dadurch dort anstehendes Rohgas (12) von dortigen Ventilbauteilen, insbesondere der Ventilmembran (5), dem Ventilsitz (11) und dem Ventilausgang (4), beabstandet.

2. Druckluftventil nach Anspruch 1, **dadurch gekennzeichnet, dass** die Zwangsleckageverbindung einen minimalen Öffnungsdurchmesser (d) aufweist, an den sich vorzugsweise ein zylindrischer Durchgangsbereich mit demgegenüber vergrößertem Öffnungsdurchmesser anschließt.

3. Druckluftventil nach Anspruch 2, **dadurch gekennzeichnet, dass** der minimale Öffnungsdurchmesser (d) der Zwangsleckageverbindung zwischen 0,1 mm und 2 mm, insbesondere 0,2 mm bis 0,5 mm beträgt.

4. Druckluftventil nach Anspruch 3, **dadurch gekennzeichnet, dass** der minimale Öffnungsdurchmesser (d) der Zwangsleckageverbindung kleiner als der minimale Öffnungsdurchmesser (D) eines Druckaufbaudurchbruchs (9) in der Ventilmembran (5) zwischen dem Reingaseingang (2) und der dem Ventilausgang (4) abgewandten Ventilseite der Ventilmembran (5) ist.

5. Druckluftventil nach einem der vorhergehenden Ansprüche, **dadurch gekennzeichnet, dass** die Leckageöffnung (14) sich mittig durch die Ventilmembran (5) erstreckt.

6. Druckluftventil nach einem der vorhergehenden Ansprüche, **dadurch gekennzeichnet, dass** die Leckageöffnung (14) eine Materialverstärkung aufweist.

7. Druckluftventil nach Anspruch 6, **dadurch gekennzeichnet, dass** die Materialverstärkung aus einem anderen Werkstoff als die übrige Ventilmembran (5) besteht.

8. Druckluftventil nach Anspruch 6 oder 7, **dadurch gekennzeichnet dass** die Materialverstärkung hülsenartig, insbesondere mit einem Flansch (21), ausgebildet und vorzugsweise in die Ventilmembran (5) eingepresst ist.

## Claims

1. Compressed air valve for supplying clean gas, in particular a 2/2-way valve for dedusting processes, having a housing (1), which comprises a clean-gas inlet (2) for connecting to at least one pressurised clean-gas reservoir, and at least one valve outlet (4) for the pulsed release of clean gas (3), which inlet and outlet can be separated from each other by a valve membrane (5) and can be interconnected when the valve membrane (5) is lifted from the valve seat (11), **characterised in that**, between the clean-gas inlet (2) and the valve outlet (4), in each operating state, at least one forced leakage connection, which is formed by a leakage opening (14), is present in the valve membrane (5), , through which opening clean gas (3) overflows to the valve outlet (4) and which, as a result, separates crude gas (12) developing here from valve components therein, in particular from the valve membrane (5), the valve seat (11) and the valve outlet (4).

2. Compressed air valve according to claim 1, **characterised in that** the forced leakage connection has a minimal opening diameter (d) to which a cylindrical transitional region having a contrastingly enlarged opening diameter is preferably connected.

3. Compressed air valve according to claim 2, **characterised in that** the minimal opening diameter (d) of the forced leakage connection is between 0.1 mm and 2 mm, in particular from 0.2 mm to 0.5 mm.

4. Compressed air valve according to claim 3, **characterised in that** the minimal opening diameter (d) of the forced leakage connection is smaller than the minimal opening diameter (D) of a pressure build-up opening (9) in the valve membrane (5) between the clean-gas inlet (2) and the valve membrane (5) valve side remote from the valve outlet (4).

5. Compressed air valve according to any of the preceding claims, **characterised in that** the leakage opening (14) extends through the centre of the valve membrane (5).

6. Compressed air valve according to any of the preceding claims, **characterised in that** the leakage opening (14) comprises a material reinforcement.

7. Compressed air valve according to claim 6, **characterised in that** the material reinforcement consists of a different material from the rest of the valve membrane (5).

8. Compressed air valve according to either claim 6 or claim 7, **characterised in that** the material reinforcement is in the form of a sleeve, in particular having a flange (21), and is preferably pressed into the valve membrane (5).

## Revendications

1. Valve pneumatique pour alimentation en gaz pur, en particulier valve 2/2 voies pour des processus de nettoyage, avec un boîtier (1) qui présente une entrée de gaz pur (2) pour la liaison avec au moins un réservoir de gaz pur se trouvant sous pression et au moins une sortie de valve (4) pour la sortie par impulsion de gaz pur (3), lesquelles peuvent être séparées l'une de l'autre par une membrane de valve (5) et reliées entre elles lors du levage de la membrane de valve (5) d'un siège de valve (11), **caractérisée en ce qu'**au moins une liaison de fuite forcée formée par une ouverture de fuite (14) dans la membrane de valve (5) existe entre l'entrée de gaz pur (2) et la sortie de valve (4) dans chaque état de fonctionnement, par laquelle du gaz pur (3) passe vers la sortie de valve (4) et éloigne par là-même du gaz brut y stagnant (12) des composants de valve qui s'y trouvent, en particulier de la membrane de valve (5), du siège de valve (11) et de la sortie de valve (4).

2. Valve pneumatique selon la revendication 1, **caractérisée en ce que** la liaison de fuite forcée présente un diamètre d'ouverture minimal (d), auquel est contigüe de préférence une zone de passage cylindrique avec un diamètre d'ouverture agrandi en conséquence.

3. Valve pneumatique selon la revendication 2, **caractérisée en ce que** le diamètre d'ouverture minimal (d) de la liaison de fuite forcée est compris entre 0,1 mm et 2 mm, en particulier entre 0,2 mm et 0,5 mm.

4. Valve pneumatique selon la revendication 3, **caractérisée en ce que** le diamètre d'ouverture minimal (d) de la liaison de fuite forcée est inférieur au diamètre d'ouverture minimal (D) d'un percement d'établissement de pression (9) dans la membrane de valve (5) entre l'entrée de gaz pur (2) et le côté de valve éloigné de la sortie de valve (4) de la membrane de valve (5).

5. Valve pneumatique selon l'une quelconque des revendications précédentes, **caractérisée en ce que** l'ouverture de fuite (14) s'étend au milieu de la membrane de valve (5).

6. Valve pneumatique selon l'une quelconque des revendications précédentes, **caractérisée en ce que** l'ouverture de fuite (14) présente un renforcement de matériau.

7. Valve pneumatique selon la revendication 6, **caractérisée en ce que** le renforcement de matériau se compose d' un autre matériau que celui du reste de la membrane de valve (5).

8. Valve pneumatique selon la revendication 6 ou 7, **caractérisée en ce que** le renforcement de matériau est réalisé comme un manchon en particulier avec une bride (21) et est de préférence enfoncé dans la membrane de valve (5).
